# EUROPÄISCHE PATENTSCHRIFT

(11) **EP 4 047 433 B1**
(45) Veröffentlichungstag und Bekanntmachung des Hinweises auf die Patenterteilung: **01.10.2025**
(21) Anmeldenummer: 21158798.5
(22) Anmeldetag: 23.02.2021
(51) Int. Cl.: G05B 23/02

(54) **KONFIGURIERBARE NOTIFIKATIONEN ÜBER ZUSTANDSÄNDERUNGEN VON TECHNISCHEN OBJEKTEN**
CONFIGURABLE NOTIFICATIONS REGARDING CONDITION CHANGES OF TECHNICAL OBJECTS
NOTIFICATIONS CONFIGURABLES SUR LES CHANGEMENTS D'ÉTAT DES OBJETS TECHNIQUES

(43) Veröffentlichungstag der Anmeldung: 24.08.2022
(73) Patentinhaber: Siemens Aktiengesellschaft, 80333 München (DE)
(72) Erfinder: Lutz, Benjamin, 76327 Pfinztal (DE)
(74) Vertreter: Siemens Patent Attorneys

(56) Entgegenhaltungen:
- ICONICS: "ICONICS - AlarmWorX64", INTERNET, 1 January 2015 (2015-01-01), XP055822997, Retrieved from the Internet <URL:https://atautomation.com.mx/pdf/ICONICS-AlarmWorX64.pdf> [retrieved on 20210709]
- ICONICS: "Alarm Server Runtime", INTERNET, 10 December 2019 (2019-12-10), XP055823003, Retrieved from the Internet <URL:https://docs.iconics.com/V10.97/GENESIS64/Help/Apps/WBDT/AWX/AWXS10001007_Alarm_Server_Runtime.htm> [retrieved on 20210709]
- ICONICS: "Alarm Tags", INTERNET, 9 December 2019 (2019-12-09), XP055823004, Retrieved from the Internet <URL:https://docs.iconics.com/V10.96/GENESIS64/Help/Apps/AWX/AWXS10005004_Alarm_Tags.htm> [retrieved on 20210709]

## Beschreibung

Die Erfindung betrifft ein Leitsystem nach Anspruch 1. Außerdem betrifft die Erfindung eine Verwendung nach Anspruch 7 sowie ein Verfahren nach Anspruch 8.

Ein Leitsystem einer technischen Anlage kann viele Komponenten umfassen, die während des Lebenszyklus der Anlage projektiert, geladen und aktualisiert werden müssen. Die Komponenten eines Leitsystems (Automatisierungen, Operator Station Server, usw.) werden bei Projektierungsänderungen aus dem Engineering Station Server heraus beispielsweise in den Operator Station Server geladen. Ein solches Leitsystem ist beispielsweise in der EP 3 623 891 A1 offenbart.

Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem kann neben einem Operator Station Server und einem Operator Station Client beispielsweise auch sogenannte prozess- oder fertigungsnahe Komponenten umfassen, die zur Ansteuerung von Aktoren bzw. Sensoren dienen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen (wie einem Automatisierungsgerät) der technischen Anlage her und gibt Daten der technischen Anlage an sogenannte "Operator Station Clients" weiter, die zur Bedienung und Beobachtung eines Betriebs der einzelnen Funktionselemente der technischen Anlage dienen.

Der Operator Station Server kann selbst über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 oder SIMATIC PCS neo Industrial Workstation Server der Firma SIEMENS handeln.

Für die Bedienung und Beobachtung technischer Anlagen werden Operatoren dynamisierte Anlagenbilder, d.h. grafische Ansichten zur Darstellung von Trendverläufen, Alarmsequenzen oder Zuständen von Messeinrichtungen (beispielsweise Prozessmesseinrichtungen) und dergleichen angeboten. Im Regelbetrieb sind insbesondere Übersichtsbilder von Bedeutung, in denen der aktuelle Zustand der Anlagenteile "komprimiert" dargestellt wird. Typischerweise handelt ein Operator, wenn beim Betrieb Alarme auftreten, oder um routinemäßige Prüfungen oder Optimierungen vorzunehmen. Routinemäßig prüft ein Operator beispielsweise stichprobenartig die Signalqualität einzelner Messeinrichtungen, das Vorhandensein von aktiven Memo-Nachrichten anderer Operatoren, Betriebseinstellungen von Messeinrichtungen und dergleichen.

Um nicht sämtliche Anlagenbilder zur Prüfung bestimmter Zustände bestimmter Messeinrichtungen (z.B. Prozessobjekte vom Typ "Regler" in einer "Teilanlage 1" im Zustand "Simulation") anwählen zu müssen, können Operatoren zur Laufzeit Statusinformationen von Messeinrichtungen aus digitalen Abbildern der technischen Anlage, insbesondere Prozessabbildern, über eine spezielle Suchfunktion eines Operator Station Clients suchen und abrufen.

Die Suche und Abfrage von Zuständen von Messeinrichtungen muss durch Operatoren ad hoc vorgenommen werden - sozusagen als Stichprobe. Ist der Operator nun gezwungen, bestimmte Zustände über einen längeren Zustand zu beobachten (z.B. im Zuge einer Wartung, Inbetriebnahme, Aktualisierung, usw.), so bleibt ihm nach dem Stand der Technik nichts anderes übrig, als die spezielle Suchfunktion in dem Operator Station Client geöffnet zu lassen, was die eigentliche Bedienung und Beobachtung über Anlagenbilder stark einschränkt. Weiterhin kann nach dem Stand der Technik auch nur eine Anfrage bearbeitet werden, die darüber hinaus auch nicht fortlaufend aktualisiert wird, sondern vielmehr ein Schnappschuss ist, der bei längerer Beobachtung kontinuierlich neu abgerufen werden muss.

"Iconics - AlarmWorX64, XP055822997 offenbart ein Visualisierungs- und Alarmmanagementsystem für Prozessanlagen.

Der Erfindung liegt die Aufgabe zugrunde, ein Leitsystem für eine technische Anlage anzugeben, welches ein Bedienen und Beobachten der technischen Anlage erleichtert und dabei Einschränkungen beim Bedienen und Beobachten vermeidet.

Diese Aufgabe wird gelöst durch ein Leitsystem nach Anspruch 1. Zudem wird die Aufgabe gelöst durch die Verwendung eines Leitsystems gemäß Anspruch 7 und durch ein Verfahren gemäß Anspruch 8. Vorteilhafte Weiterbildungen ergeben sich aus den abhängigen Ansprüchen.

Ein Leitsystem eingangs beschriebener Art ist erfindungsgemäß dadurch gekennzeichnet, dass der Operator Station Server dazu ausgebildet ist, dem Operator durch den Operator Station Client zur Laufzeit eine kontinuierliche Überwachung eines durch den Operator zur Laufzeit der technischen Anlage festlegbaren Zustandes einer festlegbaren Messeinrichtung der technischen Anlage zu ermöglichen, wobei der Operator Station Server dazu ausgebildet ist, den Operator durch den Operator Station Client über eine Änderung des Zustandes der Messeinrichtung, unabhängig von einer visuellen Darbietung des Anlagenbildes, zu notifizieren, wobei der Zustand der Messeinrichtung dem auf dem Operator Station Server implementierten Abbild der technischen Anlage entnehmbar ist.

Das Anlagenbild kann beispielsweise eine Alarmmeldungsanzeige und sogenannte Faceplates, d.h. grafische Repräsentationen von Messeinrichtungen der technischen Anlage, umfassen.

Der Begriff "Messeinrichtung" wird vorliegend in Anlehnung an die DIN-Norm 1319 als Gesamtheit von Messgeräten und gegebenenfalls zusätzlich notwendiger Einrichtungen zur Erzielung eines bestimmten Messergebnisses verstanden. Im einfachsten Fall handelt es sich bei der Messeinrichtung demnach um ein einziges Messgerät, welches ein Messergebnis zur Verfügung stellt.

In dem digitalen Abbild des Operator Station Servers ist eine Momentaufnahme der (Signal-)Zustände von mit dem Operator Station Server über eine Geräteschnittstelle verbindbaren Messeinrichtungen hinterlegt.

Der Operator Station Server ist dazu ausgebildet, dem Operator eine kontinuierliche Überwachung eines Zustandes einer Messeinrichtung der technischen Anlage zu ermöglichen. Dabei kann der Operator festlegen, welchen Zustand welcher Messeinrichtung er überwacht haben möchte. Mit anderen Worten kann der Operator auf der einen Seite festlegen, welche Messeinrichtung er überwachen möchte. Auf der anderen Seite kann er auch festlegen, welchen Zustand einer bestimmten Messeinrichtung er überwacht haben möchte (für den Fall, dass einer Messeinrichtung mehrere Zustände zuordenbar sind).

Den Zustand bzw. einen Zustand der Messeinrichtung kann der Operator Station Server einem digitalen Abbild der technischen Anlage entnehmen, welches auf dem Operator Station Server implementiert ist. Der Operator Station Server ist dann dazu ausgebildet, den Operator über eine Änderung des Zustandes über den Operator Station Client zu notifizieren. Dabei ist es nicht von Bedeutung, welches Anlagenbild dem Operator durch den Operator Station Client aktuell angezeigt wird. Die Messeinrichtung, auf die sich die Überwachung bezieht, muss also nicht gerade, beispielsweise durch ein Faceplate, visualisiert sein.

Bei einem von dem Operator festlegbaren Zustand kann es sich beispielweise um die Aussage "Schwellwert XY ist über- oder unterschritten" handeln, den ein aktuelles von der Messeinrichtung ausgegebenes Messsignal aufweist. Überschreitet das Messsignal den Schwellwert XY, ändert sich der von dem Operator festgelegte Zustand von "Schwellwert ist nicht über- oder unterschritten" in "Schwellwert ist über- oder unterschritten". Der Operator bekommt dann eine entsprechende Notifikation durch den Operator Station Client beispielsweise grafisch dargestellt. Auch akustische oder haptische Notifikationen sind möglich.

Weitere Beispiele für Zustände sind "Handsteuerung / Automatikmodus", "Aktiv / Simulation" oder "Signalqualität ausreichend". Man kann auch von einem Betriebszustand der Messeinrichtung sprechen. Den Zuständen ist gemein, dass sie eine niedrige Volatilität aufweisen und sich im Bereich von Minuten, Stunden oder Tagen ändern können. Nicht von dem Begriff "Zustand" umfasst ist der aktuell von der Messeinrichtung ausgegebene Messwert der Messeinrichtung wie einem Sensor bzw. Messumformer, da er eine hohe Volatilität im Bereich von Sekunden oder Millisekunden aufweist, was zu einer übermäßig großen Menge an Notifikationen für den Operator führen würde.

Durch das erfindungsgemäße Leitsystem können Operatoren einer technischen Anlage zur Laufzeit der technischen Anlage konfigurierbare Notifikationen für Zustandsänderungen von Messeinrichtungen der technischen Anlage einrichten. Dadurch können die Operatoren situationsbedingt definierte automatische Überwachungen von Objektzuständen einrichten, so dass eine automatische Notifikation erfolgen kann, falls diese sich ändern. Dadurch wird weder die Bedienung und Beobachtung eingeschränkt, noch können Operatoren für sie wichtige Zustandsübergänge versäumen.

Bevorzugt ist der Operator Station Server dazu ausgebildet ist, dem Operator durch den Operator Station Client eine kontinuierliche Überwachung einer Mehrzahl von durch den Operator festlegbaren Zuständen einer Mehrzahl von Messeinrichtungen der technischen Anlage zu ermöglichen, wobei der Operator Station Server dazu ausgebildet ist, den Operator durch den Operator Station Client jeweils über eine Änderung des Zustandes einer Messeinrichtung, unabhängig von einer visuellen Darbietung des Anlagenbildes, zu notifizieren. Dabei können die Zustände der Mehrzahl von Messeinrichtungen jeweils unabhängig voneinander festlegbar sein.

Der Operator kann also auch eine Mehrzahl von Zuständen, die sich voneinander unterscheiden können, einer einzigen Messeinrichtung überwachen lassen. Er kann aber auch eine Mehrzahl von Zuständen einer Mehrzahl von Messeinrichtungen überwachen zur Überwachung einrichten lassen. Auch möglich ist eine Überwachung derselben Art Zustand bei mehreren Messeinrichtungen.

Besonders bevorzugt ist der der Operator Station Server dazu ausgebildet, in einem nutzerspezifischen Speicher zu hinterlegen, welchen Zustand oder welche Zustände der Operator für die kontinuierliche Überwachung festgelegt hat. Die durch den Operator zur Laufzeit konfigurierte(n) Zustandsüberwachung(en) kann/können dadurch persistiert werden, so dass sie durch den Operator auch nach einer Wiederanmeldung (auch auf anderen Operator Station Clients) verfügbar ist und auch wieder aktiviert werden kann.

Der Operator kann vorteilhafterweise entscheiden, ob eine von ihm bereits eingerichtete Überwachung aktiv oder inaktiv sein soll. Bevorzugt ist der Operator Station Server dazu ausgebildet ist, eine Statusinformation zur visuellen Darstellung durch den Operator Station Client an den Operator Station Client zu übertragen, derart, dass die Statusinformation anzeigt, ob für eine bestimmte Messeinrichtung der technischen Anlage die Überwachung eines Zustands der Messeinrichtung aktiv (oder inaktiv) ist.

Die zuvor formulierte Aufgabe wird zudem gelöst durch ein Verfahren nach Anspruch 8.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Es zeigen:
- FIG 1: eine schematische Darstellung eines erfindungsgemäßen Leitsystems;
- FIG 2: eine Übersichtsanzeige eines Anlagenbildes;
- FIG 3: ein Anlagenbild zur Bedienung und Beobachtung gemäß einem ersten Aspekt; und
- FIG 4: das Anlagenbild aus FIG 3 gemäß einem zweiten Aspekt.

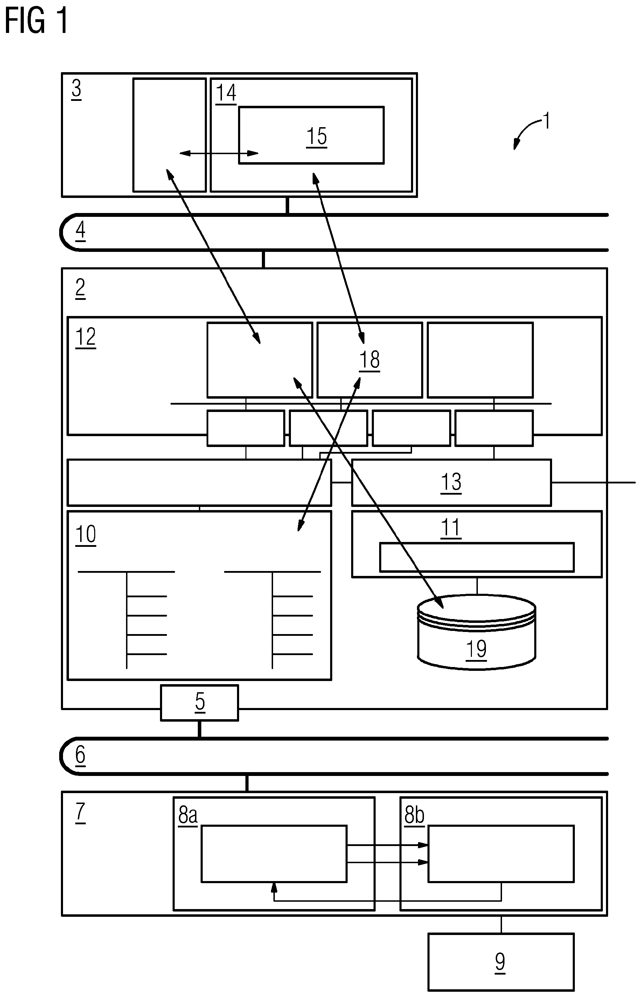

In FIG 1 ist ein Teil eines erfindungsgemäßen Leitsystems 1 einer als Prozessanlage, d.h. als verfahrenstechnische Anlage, ausgebildeten technischen Anlage dargestellt. Das Leitsystem 1 umfasst einen Operator Station Server 2 und einen Operator Station Client 3.

Der Operator Station Server 2 und der Operator Station Client 3 sind über einen Terminalbus 4 miteinander und optional mit nicht dargestellten weiteren Komponenten des Leitsystems 1 wie einem Prozessdatenarchiv verbunden.

Ein Benutzer bzw. Operator kann zum Zwecke des Bedienens und Beobachtens über den Operator Station Client 3 mittels des Terminalbus 4 auf den Operator Station Server 2 oder auf weitere, nicht dargestellte Operator Station Server zugreifen. Der Terminalbus 4 kann, ohne sich darauf zu beschränken, beispielsweise als Industrial Ethernet ausgebildet sein.

Der Operator Station Server 2 weist eine Geräteschnittstelle 5 auf, die mit einem Anlagenbus 6 verbunden ist. Über diese Geräteschnittstelle 5 kann der Operator Station Server 2 mit einem Automatisierungsgerät 7 sowie mit optional vorhandenen weiteren Komponenten der Prozessanlage kommunizieren. Der Anlagenbus 6 kann, ohne sich darauf zu beschränken, beispielsweise als Industrial Ethernet ausgebildet sein. Das Automatisierungsgerät 7 kann mit einer beliebigen Anzahl an Subsystemen (nicht dargestellt) verbunden sein. Auf dem Automatisierungsgerät 7 ist eine Automatisierung 8a, 8b implementiert, welche zum Betrieb einer Messeinrichtung 9 verwendet wird. Das Automatisierungsgerät 7 liest Prozessmesswerte von der Messeinrichtung aus und überträgt diese an den Operator Station Server 2, wo sie in einem Prozessabbild 10, d.h. einem digitalen Abbild, hinterlegt werden.

Auf dem Operator Station Server 2 sind unter anderem ein Nutzerauswahldienst 11 und ein Visualisierungsdienst 12 implementiert. Ein ebenfalls auf dem Operator Station Server 2 implementierter Verteilungsdienst 13 koordiniert den Datenausgleich mit weiteren Operator Station Servern (nicht dargestellt), worauf hier aber nicht näher eingegangen wird.

Der Visualisierungsdienst 12 ist dazu ausgebildet, wenigstens ein Anlagenbild 14 an den Operator Station Client 3 zu übermitteln, welcher das Anlagenbild 14 einem Operator der Prozessanlage visuell darstellt. Das Anlagenbild 14 (in der Regel eine Mehrzahl von Anlagenbildern) kann zuvor in einer Engineering-Phase der Prozessanlage von einem Projekteur erstellt worden und an den Operator Station Server 2 übertragen worden sein. In dem Anlagenbild 14 ist, neben weiteren Elementen, eine grafische Repräsentation der Messeinrichtung 9 enthalten.

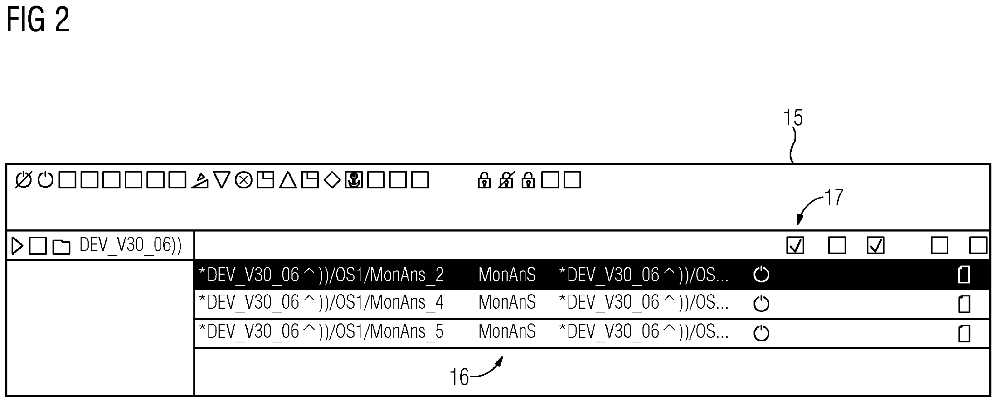

Im Folgenden wird der Ablauf eines erfindungsgemäßen Verfahrens beschrieben:
Ein Operator wählt eine Messeinrichtung 9 aus, deren Zustand der überwacht haben möchte. Hierzu kann er sich einer speziellen Übersichtsanzeige 15 bedienen, die von dem Operator Station Client 3 dargestellt werden kann. In der Übersichtsanzeige 15 kann sich der Operator beispielsweise eine Liste 16 von Messeinrichtungen 9 anzeigen lassen, die einen bestimmten Zustand aufweisen können. Der Operator kann hierbei die Liste beispielsweise nach Zuständen filtern. In FIG 2 ist eine solche Übersichtsanzeige 15 dargestellt.

Der Operator legt nun fest, welchen Zustand welcher Messeinrichtung 9 er überwacht haben möchte. In der Übersichtsanzeige 15 wird dies durch die Auswahl einer Auswahlbox 17 symbolisiert (ein Hakenzeichen bedeutet, dass dieser Zustand für die Überwachung ausgewählt ist).

Ein auf dem Operator Station Server 2 implementierter Überwachungsdienst 18 meldet sich darauf hin bei dem Prozessabbild 10 auf Überwachung der festgelegten Messeinrichtung 9 an. Dies bedeutet, dass er von dem Prozessabbild 10 benachrichtigt wird, wenn sich der von dem Operator festgelegte Zustand der Messeinrichtung 9 ändert.

Parallel dazu überträgt der Überwachungsdienst 18 die von dem Operator getroffene Wahl (also welcher Zustand welcher Messeinrichtung) an den Nutzerauswahldienst 11, welcher die Wahl in einem nutzerspezifischen Speicher 19 auf dem Operator Station Server 2 hinterlegt. Der Speicher 19 muss sich nicht zwingend auf dem Operator Station Server 2 befinden, sondern sich insbesondere auch außerhalb der Prozessanlage befinden. Die Hinterlegung der von dem Operator getroffenen Wahl in dem Speicher 19 ermöglicht es, dass der Operator auch nach einer Abmeldung und Wiederanmeldung in dem Leitsystem 1 auf die von ihm gewünschte Überwachung zugreifen kann, ohne sie neu festlegen zu müssen.

Wird von dem Prozessabbild 10 eine Zustandsänderung einer Messeinrichtung 9 gemeldet, so prüft der Überwachungsdienst 18, ob damit eine Bedingung der von dem Operator angeforderten Zustandsüberwachung erfüllt ist, und meldet diese - falls zutreffend - mittels einer Notifikation an den Operator Station Client 3 weiter, der die Notifikation im aktuell geöffneten Anlagenbild 14 darstellt - unabhängig davon, ob die betroffene Messeinrichtung 9 aktuell in diesem Anlagenbild 14 digital, also grafisch repräsentiert wird.

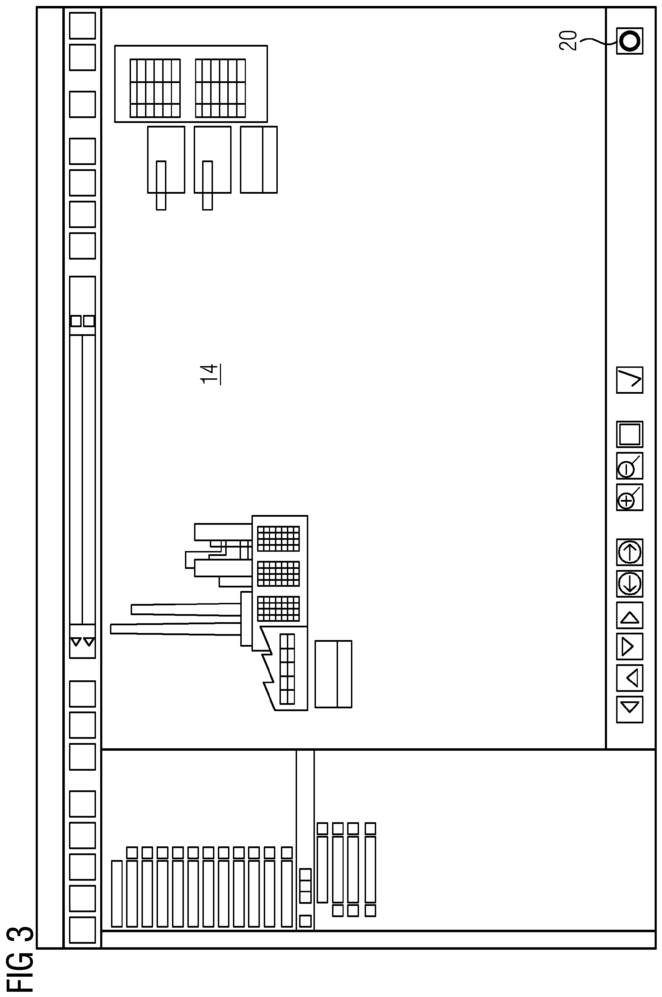

In FIG 3 ist die Integration der operatorenspezifisch und zur Laufzeit der Prozessanlage konfigurierbaren Notifikationen bei Zustandsänderungen von Messeinrichtungen 9 in ein von dem Operator Station Client 3 dargestelltes Anlagenbild 14 gezeigt. Die aktive Zustandsüberwachung ist durch ein Kreissymbol 20 als Statusinformation im rechten unteren Bereich von FIG 3 verdeutlicht. Über dasselbe Kreissymbol 20 ist es dem Operator auch möglich vorkonfigurierte Zustandsüberwachungen zu deaktivieren.

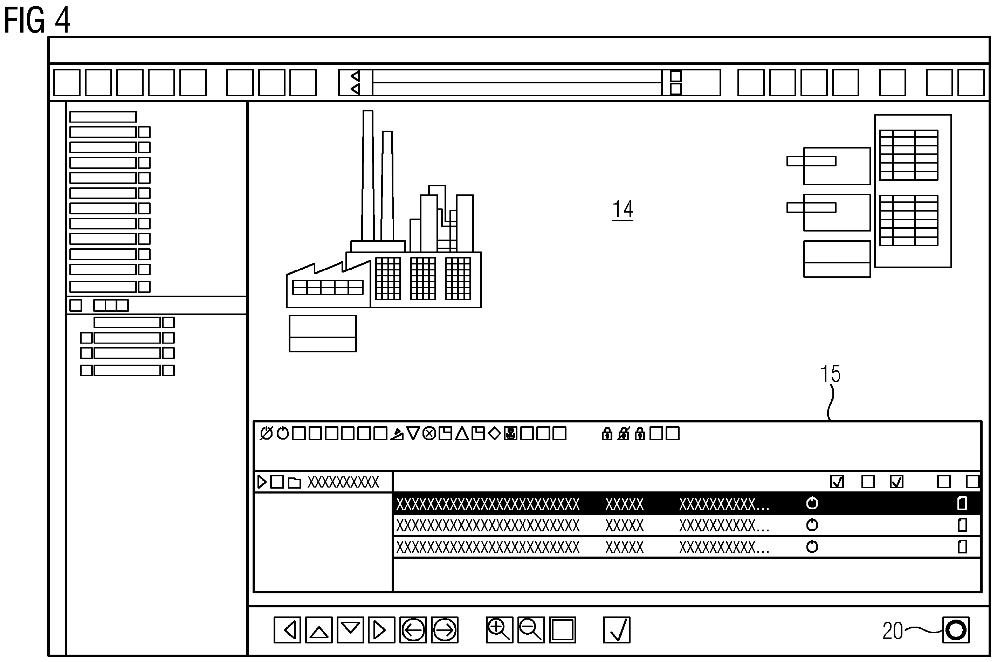

In FIG 4 ist dasselbe Anlagenbild 14 wie in FIG 3 dargestellt. Zusätzlich ist die Übersichtsanzeige 15 dargestellt, mit deren Hilfe der Operator nicht nur eine neue Überwachung einrichten kann, sondern auch bereits bestehende Zustandsüberwachungen wieder aktiviert kann.

Durch das erläuterte Verfahren bzw. das Leitsystem 1 kann nahezu ausgeschlossen werden, dass dem Operator eine für ihn gegenwärtig wichtige Zustandsänderung - auch ohne ein hierfür explizit im Engineering festgelegtes Alarmmanagement - verdeckt bleibt. Hat ein Operator mehrere Zustandsüberwachungen konfiguriert, so kann er frei entscheiden, welche davon aktiv sein sollen.

Insgesamt kann durch die Erfindung ein Operator individuell Zustandsüberwachungen für Messeinrichtungen einrichten, um automatisch zur Laufzeit über Zustandsänderungen notifiziert zu werden. Die Bedienung und Beobachtung ist trotz der Zustandsüberwachung in vollem Umfang möglich. Die Zustandsüberwachung(en) kann/können flexibel und effizient durch den Operator eingerichtet und auch durch Anwenderselektionen persistiert werden, um auch Routineprüfungen und Prüfungspläne unterstützen zu können. Generell kann die Erfindung das Bedienen und Beobachten der Prozessanlage verbessern.

## Patentansprüche

1. Leitsystem (1) für eine
Prozess- oder Fertigungsanlage, das wenigstens einen Operator Station Server (2) und einen Operator Station Client (3) aufweist,
wobei der Operator Station Server (2) einen computerimplementierten Visualisierungsdienst (12) umfasst, der dazu ausgebildet ist, wenigstens ein Anlagenbild (14) an den Operator Station Client (3) zu übertragen,
wobei der Operator Station Client (3) dazu ausgebildet ist, das wenigstens eine Anlagenbild (14) einem Operator des Leitsystems (1) für eine Bedienung und Beobachtung der Prozess- oder Fertigungsanlage visuell darzubieten, wobei auf dem Operator Station Server (2) ein Prozessabbild der Prozess- oder Fertigungsanlage implementiert ist,
wobei der Operator Station Server (2) dazu ausgebildet ist, dem Operator durch den Operator Station Client (3) zur Laufzeit eine kontinuierliche Überwachung eines durch den Operator zur Laufzeit der Prozess- oder Fertigungsanlage festlegbaren Zustandes einer von dem Operator festlegbaren Messeinrichtung (9) der Prozess- oder Fertigungsanlage zu ermöglichen,
wobei der Zustand der Messeinrichtung (9) dem auf dem Operator Station Server (2) implementierten Prozessabbild der Prozess- oder Fertigungsanlage entnehmbar ist,
**dadurch gekennzeichnet, dass** der Operator Station Server (2) dazu ausgebildet ist, den Operator durch den Operator Station Client (3) mittels in das von dem Operator Station Client (3) dargestellten Anlagenbild (14) integrierter, operatorenspezifischer und zur Laufzeit der Prozess- oder Fertigungsanlage konfigurierbarer Notifikationen über eine Änderung des Zustandes der Messeinrichtung (9), unabhängig von einer visuellen Darbietung des Anlagenbildes (14), d. h. unabhängig davon, ob die betroffene Messeinrichtung (9) aktuell in diesem Anlagenbild (14) digital, also grafisch repräsentiert wird, zu notifizieren.

2. Leitsystem (1) nach Anspruch 1, bei dem der Operator Station Server (2) dazu ausgebildet ist, dem Operator durch den Operator Station Client (3) eine kontinuierliche Überwachung einer Mehrzahl von durch den Operator festlegbaren Zuständen einer Mehrzahl von Messeinrichtungen (9) der technischen Anlage zu ermöglichen, wobei der Operator Station Server (2) dazu ausgebildet ist, den Operator durch den Operator Station Client (3) jeweils über eine Änderung des Zustandes einer Messeinrichtung (9), unabhängig von einer visuellen Darbietung des Anlagenbildes (14), zu notifizieren.

3. Leitsystem nach Anspruch 2, wobei die Zustände der Mehrzahl von Messeinrichtungen (9) jeweils unabhängig voneinander durch den Operator festlegbar sind.

4. Leitsystem (1) nach einem der Ansprüche 1 bis 3, bei dem der Operator Station Server (2, 4) dazu ausgebildet ist, in einem nutzerspezifischen Speicher (19) zu hinterlegen, welchen Zustand oder welche Zustände der Operator für die kontinuierliche Überwachung festgelegt hat.

5. Leitsystem (1) nach einem der vorangegangenen Ansprüche, bei dem von dem Operator festlegbar ist, ob die kontinuierliche Überwachung eines Zustands einer Messeinrichtung (9) aktiv oder inaktiv sein soll.

6. Leitsystem (1) nach einem der vorangegangenen Ansprüche, bei dem der Operator Station Server (2, 4) dazu ausgebildet ist, eine Statusinformation (20) zur visuellen Darstellung an den Operator Station Client (3) zu übertragen, derart, dass die Statusinformation (20) anzeigt, ob für eine bestimmte Messeinrichtung (9) der technischen Anlage die Überwachung eines Zustands der Messeinrichtung (9) aktiv ist.

7. Verwendung eines Leitsystems (1) gemäß einem der Ansprüche 1 bis 6 zum Betrieb einer technischen Anlage.

8. Verfahren zur Einrichtung einer kontinuierlichen Überwachung eines Zustandes einer Messeinrichtung einer Fertigungs- oder Prozessanlage durch ein Leitsystem (1) der Fertigungs- oder Prozessanlage, wobei das Leitsystem (1) wenigstens einen Operator Station Server (2) und einen Operator Station Client (3) aufweist,
wobei der Operator Station Server (2) einen computerimplementierten Visualisierungsdienst (12) umfasst, der dazu ausgebildet ist, wenigstens ein Anlagenbild (14) an den Operator Station Client (3) zu übertragen,
wobei der Operator Station Client (3) dazu ausgebildet ist, das wenigstens eine Anlagenbild (14) einem Operator des Leitsystems (1) für eine Bedienung und Beobachtung der Fertigungs- oder Prozessanlage visuell darzubieten,
das Verfahren umfassend:
a) Übermitteln einer Anfrage eines Operators der Fertigungs- oder Prozessanlage zur Einrichtung der kontinuierlichen Überwachung durch den Operator Station Client (3) an den Operator Station Server (2), wobei der Operator festlegt, für welche Messeinrichtung (9) der Fertigungs- oder Prozessanlage und für welchen Zustand der Messeinrichtung (9) die Überwachung eingerichtet werden soll,
b) Einrichtung der kontinuierlichen Überwachung des durch den Operator zur Laufzeit der Fertigungs- oder Prozessanlage festgelegten Zustandes der Messeinrichtung (9) der Fertigungs- oder Prozessanlage durch den Operator Station Server (2), wobei der Operator Station Server (2) den Zustand der Messeinrichtung (9) einem auf dem Operator Station Server (2) implementierten Prozessabbild der Prozess- oder Fertigungsanlage entnimmt,
**dadurch gekennzeichnet, dass**
der Operator Station Server (2) dazu ausgebildet ist, den Operator durch den Operator Station Client (3) mittels in das von dem Operator Station Client (3) dargestellten Anlagenbild (14) integrierter, operatorenspezifischer und zur Laufzeit der Prozess- oder Fertigungsanlage konfigurierbarer Notifikationen über eine Änderung des Zustandes der Messeinrichtung (9), unabhängig von einer visuellen Darbietung des Anlagenbildes (14), d. h. unabhängig davon, ob die betroffene Messeinrichtung (9) aktuell in diesem Anlagenbild (14) digital, also grafisch repräsentiert wird, zu notifizieren.

9. Verfahren nach Anspruch 8, bei dem der Operator eine Anfrage zur Einrichtung der kontinuierlichen Überwachung eine Mehrzahl von Zuständen einer Mehrzahl von Messeinrichtungen (9) durch den Operator Station Client (3) an den Operator Station Server (2) übermittelt, und bei dem der Operator Station Server (2) die kontinuierliche Überwachung der durch den Operator zur Laufzeit der technischen Anlage festgelegten Mehrzahl von Zuständen der Mehrzahl von Messeinrichtungen (9) der technischen Anlage einrichtet.

10. Verfahren nach Anspruch 8 oder 9, bei dem die Zustände der Mehrzahl von Messeinrichtungen (9) jeweils unabhängig voneinander durch den Operator festgelegt werden.

11. Verfahren nach einem der Ansprüche 8 bis 10, bei dem der Operator Station Server (2) in einem nutzerspezifischen Speicher hinterlegt, welchen Zustand oder welche Zustände der Operator für die kontinuierliche Überwachung festgelegt hat.

12. Verfahren nach einem der Ansprüche 8 bis 11, bei dem der Operator festlegt, ob die kontinuierliche Überwachung eines Zustands, einer Messeinrichtung (9) aktiv oder inaktiv sein soll.

13. Verfahren nach einem der Ansprüche 8 bis 12, bei dem der Operator Station Server (2) eine Statusinformation (20) zur visuellen Darstellung an den Operator Station Client (3) zu übertragen, derart, dass die Statusinformation (20) anzeigt, ob für eine bestimmte Messeinrichtung (9) der technischen Anlage die Überwachung eines Zustands der Messeinrichtung (9) aktiv ist.

## Claims

1. Control system (1) for a process or manufacturing plant, having at least one operator station server (2) and one operator station client (3),
wherein the operator station server (2) comprises a computer-implemented visualisation service (12) which is designed to transmit at least one plant mimic diagram (14) to the operator station client (3)
wherein the operator station client (3) is designed to visually present the at least one plant mimic diagram (14) to an operator of the control system (1) for operation and observation of the process or manufacturing plant,
wherein a process image of the process or manufacturing plant is implemented on the operator station server (2),
wherein the operator station server (2) is designed to enable the operator, by means of the operator station client (3), to continuously monitor, during runtime, a state, specifiable by the operator during runtime of the process or manufacturing plant, of an operator-specifiable measuring device (9) of the process or manufacturing plant,
wherein the state of the measuring device (9) can be obtained from the process image (10) of the process or manufacturing plant implemented on the operator station server (2), **characterised in that**
the operator station server (2) is designed, by means of the operator station client (3), using notifications which are integrated in the plant mimic diagram (14) presented by the operator station client (3), are operator-specific and can be configured during runtime of the process or manufacturing plant, to notify the operator of a change in the state of the measuring device (9), independently of a visual presentation of the plant mimic diagram (14), i.e. irrespective of whether the measuring device (9) in question is currently represented digitally, i.e. graphically, in this plant mimic diagram (14).

2. Control system (1) according to claim 1, wherein the operator station server (2) is designed to enable the operator, by means of the operator station client (3), to continuously monitor a plurality of operator-specifiable states of a plurality of measuring devices (9) of the technical plant, wherein the operator station server (2) is designed to notify the operator, by means the operator station client (3), of any change in the state of a measuring device (9), independently of a visual presentation of the plant mimic diagram (14).

3. Control system according to claim 2, wherein the states of the plurality of measuring devices (9) can each be independently specified by the operator.

4. Control system (1) according to one of claims 1 to 3, wherein the operator station server (2, 4) is designed to store, in a user-specific memory (19), the state or states that the operator has specified for continuous monitoring.

5. Control system (1) according to one of the preceding claims,
wherein the operator can specify whether the continuous monitoring of a state of a measuring device (9) is to be active or inactive.

6. Control system (1) according to one of the preceding claims,
wherein the operator station server (2, 4) is designed to transmit status information (20) for visual display to the operator station client (3) such that the status information (20) indicates whether monitoring of a state of the measuring device (9) is active for a particular measuring device (9) of the technical plant.

7. Use of a control system (1) according to one of claims 1 to 6 for operating a technical plant.

8. Method for setting up continuous monitoring of a state of a measuring device of a manufacturing or process plant by a control system (1) of the manufacturing or process plant, wherein the control system (1) has at least one operator station server (2) and one operator station client (3),
wherein the operator station server (2) comprises a computerimplemented visualisation service (12) which is designed to transmit at least one plant mimic diagram (14) to the operator station client (3)
wherein the operator station client (3) is designed to visually present the at least one plant mimic diagram (14) to an operator of the control system (1) for operation and observation of the manufacturing or process plant,
said method comprising:
a) transmitting of a request from an operator of the manufacturing or process plant to set up continuous monitoring by the operator station client (3) to the operator station server (2), wherein the operator specifies the measuring device (9) of the manufacturing or process plant and the state of the measuring device (9) for which the monitoring is to be set up,
b) setting-up of continuous monitoring by the operator station server (2) of the state of the measuring device (9) of the manufacturing or process plant as specified by the operator during runtime of the manufacturing or process plant, wherein the operator station server (2) obtains the state of the measuring device (9) from a process image of the process or manufacturing plant implemented on the operator station server (2),
**characterised in that**
the operator station server (2) is designed, by means of the operator station client (3), using notifications which are integrated in the plant mimic diagram (14) presented by the operator station client (3), are operator-specific and can be configured during runtime of the process or manufacturing plant, to notify the operator of a change in the state of the measuring device (9), independently of a visual presentation of the plant mimic diagram (14), i.e. irrespective of whether the measuring device (9) in question is currently represented digitally, i.e. graphically, in this plant mimic diagram (14).

9. Method according to claim 8, wherein the operator transmits to the operator station server (2) a request to set up continuous monitoring, by the operator station client (3), of a plurality of states of a plurality of measuring devices (9), and wherein the operator station server (2) sets up the continuous monitoring of the plurality of states of the plurality of measuring devices (9) of the technical plant as specified by the operator during runtime of the technical plant.

10. Method according to claim 8 or 9, wherein the states of the plurality of measuring devices (9) are each specified independently of one another by the operator.

11. Method according to one of claims 8 to 10, wherein the operator station server (2) stores in a user-specific memory the state or states that the operator has specified for continuous monitoring.

12. Method according to one of claims 8 to 11, wherein the operator specifies whether the continuous monitoring of a state of a measuring device (9) is to be active or inactive.

13. Method according to one of claims 8 to 12, wherein the operator station server (2) is [designed] to transmit status information (20) for visual display to the operator station client (3), such that the status information (20) indicates whether monitoring of a state of the measuring device (9) is active for a particular measuring device (9) of the technical plant.

## Revendications

1. Système (1) de conduite d'une installation de processus ou de fabrication, qui a au moins un operator station server (2) et un operator station client (3),
dans lequel l'operator station server (2) comprend un service (12) de visualisation mis en œuvre par ordinateur, qui est constitué pour transmettre au moins une image (14) d'installation à l'operator station client (3),
dans lequel l'operator station client (3) est constitué pour représenter visuellement la au moins une image (14) d'installation à un operateur du système (1) de conduite pour une commande et une observation de l'installation de processus ou de fabrication,
dans lequel une représentation de processus de l'installation de processus ou de fabrication est mise en œuvre sur l'operator station server (2),
dans lequel l'operator station server (2) est constitué pour rendre possible à l'opérateur, par l'operator station client (3) pendant le temps de marche, un contrôle continu d'un état, pouvant être déterminé par l'opérateur pendant le temps de marche de l'installation de processus ou de fabrication, d'un dispositif (9) de mesure de l'installation de processus ou de fabrication pouvant être déterminé par l'opérateur,
dans lequel l'état du dispositif (9) de mesure peut être tiré de la représentation de processus, mise en œuvre sur l'operator station server (2), de l'installation de processus ou de fabrication,
**caractérisé en ce que** l'operator station server (2) est constitué pour notifier à l'opérateur, par l'operator station client (3), des notifications intégrées dans l'image (14) d'installation représentée par l'operator station client (3), spécifiques à l'opérateur et configurables pendant le temps de marche de l'installation de processus ou de fabrication sur une modification de l'état du dispositif (9) de mesure, indépendamment d'une représentation visuelle de l'image (14) d'installation, c'est-à-dire indépendamment du point de savoir, si le dispositif (9) de mesure concerné est représenté actuellement dans cette image (14) d'installation de manière digitale, donc graphiquement.

2. Système (1) de conduite suivant la revendication 1, dans lequel l'operator station server (2) est constitué pour rendre possible à l'opérateur, par l'operator station client (3), un contrôle continu d'une pluralité d'états, pouvant être déterminés par l'opérateur, d'une pluralité de dispositifs (9) de mesure de l'installation technique, dans lequel l'operator station server (2) est constitué pour notifier à l'opérateur, par l'operator station client (3), respectivement une modification de l'état d'un dispositif (9) de mesure, indépendamment d'une représentation visuelle de l'image (14) d'installation.

3. Système de conduite suivant la revendication 2, dans lequel les états de la pluralité de dispositifs (9) de mesure peuvent être déterminés respectivement par l'opérateur indépendamment les uns des autres.

4. Système (1) de conduite suivant l'une des revendications 1 à 3, dans lequel l'operator station server (2, 4) est constitué pour mettre, dans une mémoire (19) spécifique à l'utilisateur, l'état ou les états que l'opérateur a déterminés pendant le contrôle continu.

5. Système (1) de conduite suivant l'une des revendications précédentes, dans lequel il peut être déterminé par l'opérateur, si le contrôle continu d'un état d'un dispositif (9) de mesure doit être actif ou inactif.

6. Système (1) de conduite suivant l'une des revendications précédentes, dans lequel l'operator station server (2, 4) est constitué pour transmettre, à l'operator station client (3), une information (20) de statut pour la représentation visuelle, de manière à ce que l'information (20) de statut indique si, pour un dispositif (9) de mesure déterminé de l'installation technique, le contrôle d'un état du dispositif (9) de mesure est actif.

7. Utilisation d'un système (1) de conduite suivant l'une des revendications 1 à 6 pour faire fonctionner une installation technique.

8. Procédé d'établissement d'un contrôle continu d'un état d'un dispositif de mesure d'une installation de fabrication ou de processus par un système (1) de conduite de l'installation de fabrication ou de processus,
dans lequel le système (1) de conduite a au moins un operator station server (2) et un operator station client (3),
dans lequel l'operator station server (2) comprend un service (12) de visualisation mis en œuvre par ordinateur, qui est constitué pour transmettre au moins une image (14) de l'installation à l'operator station client (3),
dans lequel l'operator station client (3) est constitué pour représenter visuellement la au moins une image (14) d'installation à un operateur du système (1) de conduite pour une commande et une observation de l'installation de processus ou de fabrication,
le procédé comprenant :
a) transmission à l'operator station server (2) d'une demande d'un opérateur de l'installation de fabrication de processus pour l'établissement du contrôle continu par l'operator station client (3), dans lequel l'opérateur détermine le dispositif (9) de mesure de l'installation de fabrication ou de processus et l'état du dispositif (9) de mesure pour lequel le contrôle doit être établi,
b) établissement, par l'operator station server (2), du contrôle continu de l'état, déterminé par l'opérateur pendant le temps de marche de l'installation de fabrication ou de processus, du dispositif (9) de mesure de l'installation de fabrication ou de processus, dans lequel l'operator station server (2) tire l'état du dispositif (9) de mesure d'une représentation de processus, mis en œuvre sur l'operator station server (2), de l'installation de processus ou de fabrication,
**caractérisé en ce que**
l'operator station server (2) est constitué pour notifier à l'opérateur, par l'operator station client (3), des notifications intégrées dans l'image (14) d'installation, représentées par l'operator station client (3), spécifiques à l'opérateur et configurables pendant le temps de marche de l'installation de processus ou de fabrication sur une modification de l'état du dispositif (9) de mesure, indépendamment d'une représentation visuelle de l'image (14) d'installation, c'est-à-dire indépendamment du point de savoir, si le dispositif (9) de mesure concerné est représenté actuellement dans cette image (14) d'installation de manière digitale, donc graphiquement.

9. Procédé suivant la revendication 8, dans lequel l'opérateur transmet à l'operator station server (2), par l'operator station client (3), une demande d'établissement du contrôle continu d'une pluralité d'états d'une pluralité de dispositifs (9) de mesure, et dans lequel l'operator station server (2) établit le contrôle continu de la pluralité, déterminée par l'opérateur pendant le temps de marche de l'installation, d'états de la pluralité de dispositifs (9) de mesure de l'installation technique.

10. Procédé suivant la revendication 8 ou 9, dans lequel les états de la pluralité de dispositifs (9) de mesure sont déterminés par l'opérateur respectivement indépendamment les uns des autres.

11. Procédé suivant l'une des revendications 8 à 10, dans lequel l'operator station server (2) met, dans une mémoire spécifique à l'utilisateur, l'état ou les états que l'opérateur a déterminés pour le contrôle continu.

12. Procédé suivant l'une des revendications 8 à 11, dans lequel l'opérateur détermine si le contrôle continu d'un état d'un dispositif (9) de mesure doit être actif ou inactif.

13. Procédé suivant l'une des revendications 8 à 12, dans lequel l'operator station server (2) transmet à l'operator station client (3) une information (20) de statut pour la représentation visuelle, de manière à ce que l'information (20) de statut indique si, pour un dispositif (9) de mesure déterminé de l'installation technique, le contrôle d'un état du dispositif (9) de mesure est actif.
